# EUROPEAN PATENT SPECIFICATION

(11) **EP 3 687 046 B1**
(45) Date of publication and mention of the grant of the patent: **24.11.2021**
(21) Application number: 20151925.3
(22) Date of filing: 15.01.2020
(51) Int. Cl.: H02K 7/14, H02K 7/18, H02K 7/102

(54) **BRAKE DEVICE OF IN-WHEEL MOTOR AND IN-WHEEL MOTOR HAVING THE SAME**
BREMSVORRICHTUNG EINES RADINTERNEN MOTORS UND RADINTERNER MOTOR MIT EINER SOLCHEN VORRICHTUNG
DISPOSITIF DE FREIN DE MOTEUR-ROUE ET MOTEUR-ROUE LE COMPRENANT

(30) Priority: 25.01.2019 KR 20190010121
(43) Date of publication of application: 29.07.2020
(73) Proprietor: LG Electronics Inc., SEOUL, 07336 (KR)
(72) Inventor: NAM, Jaekwang, 08592 Seoul (KR); KO, Hyojin, 08592 Seoul (KR); KIM, Dosun, 08592 Seoul (KR); LEE, Yeon Soo, 08592 Seoul (KR)
(74) Representative: Vossius & Partner Patentanwälte Rechtsanwälte mbB

(56) References cited:
- EP-A1- 1 655 259
- EP-B1- 1 655 259
- CN-U- 208 028 721
- US-A1- 2011 227 435

## Description

### BACKGROUND

### 1. Field of the Invention

The present invention relates to a brake device of an in-wheel motor and an in-wheel motor including the same.

### 2. Discussion of Related Art

In-wheel motors are used in transportation which uses electricity as a power source.

The in-wheel motor outputs power from a motor disposed inside a rim, and the power is directly transmitted to a wheel to rotate the rim and the wheel.

Therefore, unlike the conventional transportation, the in-wheel motor may not use complicated driving and power transmission devices such as an engine, a transmission, gears, and the like. Consequently, the in-wheel motor may reduce a weight of the transportation. Further, the in-wheel motor may reduce energy loss generated during a power transmission process.

The in-wheel motor includes a tire, a rim, a stator, a rotor, and a shaft.

The tire surrounds and is coupled to an outer ring of the rim. The stator and the rotor constitute a motor assembly. The motor assembly is provided inside the rim. The shaft is fixed at a center of the stator. The stator receives external electric power. To this end, a lead cable for supplying electric power passes through a center of the shaft to be connected to the stator.

According to the in-wheel motor configured as described above, the stator of the in-wheel motor receives the electric power from the lead cable and the rotor is rotated. Consequently, the rim is rotated together with the rotor to rotate the tire.

However, the conventional in-wheel motor indispensably requires a brake which prevents slipping in a backward direction when stopped on an inclined road. To this end, recently, an electronic brake is mainly used. However, when the electronic brake is discharged or fails, an operation of the electronic brake is not performed so as to be dangerous to a user.

Meanwhile, the in-wheel motor may be applied to a variety of wheelchairs which are used by the elderly and infirm and the disabled.

However, the in-wheel motor applied to the wheelchair should rapidly exert a braking force according to an instruction of a user. Further, even when a supply of electric power is cut-off, the in-wheel motor should maintain a braking force to protect the user.

As a related art in conjunction with the present invention, a wheelchair brake system is disclosed in Korean Patent Laid-Open Application No. 10-2016-0060436 (publication date: May 30, 2016) (hereinafter referred to as Patent Document 1). When the user stands up from a wheelchair, the wheelchair brake system disclosed in Patent Document 1 operates a brake locking state. Further, when the user sits in the wheelchair or folds the wheelchair, the wheelchair brake system is configured such that a brake is automatically released. However, the wheelchair brake system disclosed in Patent Document 1 has a disadvantage in that braking of the wheelchair is not actively performed according to an instruction of the user. Further, when the wheelchair brake system is stopped on an inclined road, the wheelchair brake system disclosed in Patent Document 1 is insufficient to secure safety of the user sitting in the wheelchair.

Further, as another related art in conjunction with the present invention, a wheelchair controlled by a disk brake is disclosed in Korean Patent Laid-Open Application No. 10-2017-0067966 (publication date: June 19, 2017) (hereinafter referred to as Patent Document 2). A disc brake disclosed in Patent Document 2 exerts a braking force due to friction. When a disc is abraded, the disc brake has a disadvantage in that a maintenance work is repeatedly required.

Further, as still another related art in conjunction with the present invention, a manual wheelchair with an auto braking device is disclosed in Korean Patent Laid-Open Application No. 10-2014-0030522 (publication date: March 12, 2014) (hereinafter referred to as Patent Document 3). The wheelchair disclosed in Patent Document 3 is configured such that braking is automatically performed on a downhill road to allow the wheelchair to safely descend. However, Patent Document 3 relates to a technique for reducing a rotation speed of a main wheel by detecting a downhill road using an inclination sensor for measuring an inclination of a main body. When a supply of electric power is cut off, the wheelchair has a disadvantage in that a braking force of the wheelchair is not exerted on an inclined road.

CN 208 028 721 U discloses a brake device according to the preamble of claim 1. Further related technology is shown in EP 1 655 259 A1 or US 2011/227435 A1.

### SUMMARY OF THE INVENTION

The present invention is directed to a brake device of an in-wheel motor capable of rapidly and safely braking transportation such as a wheelchair by actively operating a brake of an in-wheel motor according to an instruction of a user.

The present invention is also directed to a brake device of an in-wheel motor capable of not only rapidly performing braking in an electronic manner, but also having a large braking force with small energy.

The present invention is also directed to a brake device of an in-wheel motor capable of securing safety of a user by maintaining a braking force of a wheelchair during braking even when a supply of electric power is cut off on an inclined road or there is a problem in a power supply system.

According to an aspect of the present invention, there is provided a brake device of an in-wheel motor which is capable of reducing a braking time due to a rapid operation of an electronically operated pin pushing/pulling driver according to whether a control signal is input and, even when a supply of electric power is cut off, securing a large braking force using a mechanical braking mechanism in which a pin is inserted into a hole of a brake drum.

According to one embodiment of the present invention, there is provided a brake device of an in-wheel motor as defined in independent claim 1.

The pin pushing/pulling driver includes a linear actuator configured to push or pull the pin toward or from the hole in response to the braking signal of the in-wheel motor. In this case, a side surface of the linear actuator may be disposed to face an inner wall of the disc body and may be connected to the shaft. Further, the hole may be provided as a plurality of holes, and the plurality of holes may be arranged to be spaced by a predetermined interval along the circumferential protrusion in a circumferential direction thereof. For example, the plurality of holes may be formed by passing through the circumferential protrusion in a thickness direction thereof. Further, the plurality of holes may be arranged to be spaced a regular interval from each other. Accordingly, when the braking signal is input, the pin pushed toward the circumferential protrusion may be inserted into the hole located closest to the pin so that mechanical restraint between the pin and the hole may be achieved. Further, a front end portion of the pin may have a round shape, and the hole may have an inner diameter that is larger than an outer diameter of the pin. As described above, since the front end portion of the pin has the round shape, when the pin is pushed or pulled, interference and friction with a periphery of the hole may be reduced, and thus an insertion operation of the pin may be more smoothly performed.

Meanwhile, the brake device of an in-wheel motor according to the invention further includes a support part that surrounds and is coupled to the shaft inside the brake drum part and fixedly supports a rear end of the linear actuator. The support part may include a fixing plate that is spaced apart from an inner wall of the disc body to be perpendicularly coupled to the shaft and is disposed parallel to the disc body, a boss protruding from a center of an inner side of the fixing plate in a direction parallel to the shaft and having a hollow, wherein the shaft passes through and is coupled to the hollow, and a protrusion protruding from each of both longitudinal ends of the fixing plate in the direction parallel to the shaft and configured to fix and support the linear actuator. The fixing plate may be a rectangular plate member having a length that is smaller than the diameter of the disc body. Further, a protruding length of the protrusion may be formed to correspond to a protruding length of the boss. Since the protrusion is a portion for fixing and supporting the linear actuator, the protruding length of the boss connected to the shaft is formed to correspond to a length of the protrusion such that structural stability may be achieved.

Further, the linear actuator may be provided as a plurality of linear actuators, and each of the plurality of linear actuators may be disposed to be pressed against the protrusion and fixed to the protrusion by at least one engagement screw. For example, the engagement screw may be firmly engaged with a rear side of the linear actuator by passing through the protrusion. Thus, even when a braking force is exerted by the pin pushed or pulled toward or from a front side of the linear actuator, a position of the linear actuator may be fixed without movement. A pair of engagement screws may be coupled to both sides of the pin by interposing the pin between the pair of engagement screws so that an engagement structure may be more firm.

According to another aspect of the present invention, there is provided an in-wheel motor as defined in claim 9.

The in-wheel motor may further include a Hall sensor board located close to the motor assembly and having at least one Hall sensor. The in-wheel motor may further include at least one bearing provided at each of a front end and a rear end of the shaft, a shaft O-ring provided on the shaft and configured to maintain airtightness, and a front cover O-ring provided on the front cover and configured to maintain airtightness. With this configuration, when a braking signal is received from the user, the brake device stops a rotation of the rim such that rapid braking of the in-wheel motor may be possible. Further, since a state in which the pin is inserted into the hole of the brake drum is maintained due to the linear actuator, even when a supply of electric power is cut off while the in-wheel motor is stopped on an inclined road, the tire is prevented from moving down the inclined road such that an accident may be prevented.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIG. 1 is a schematic cross-sectional view illustrating an in-wheel motor according to embodiments of the present invention;
FIG. 2 is an exploded perspective view illustrating a coupling structure of the in-wheel motor according to embodiments of the present invention;
FIG. 3 is a schematic cross-sectional view illustrating a brake device of an in-wheel motor according to one example of the present invention (not being claimed);
FIG. 4 is a diagram for describing an operational structure of the brake device of an in-wheel motor according to one example of the present invention (not being claimed);
FIG. 5 is a diagram for describing an operational structure of a brake device of an in-wheel motor according to the present invention;
FIG. 6 is a schematic rear view illustrating the brake device of an in-wheel motor according to another embodiment of the present invention; and
FIG. 7 is a usage diagram illustrating a state in which a wheelchair including the in-wheel motor according to embodiments of the present invention does not slide downward on an inclined road.

### DETAILED DESCRIPTION OF EXEMPLARY EMBODIMENTS

Embodiments of the present invention will be fully described in detail below so as to allow those skilled in the art to which the present invention pertains to carry out the present invention with reference to the accompanying drawings. The present invention may be implemented in various different forms, and thus it is not limited to embodiments which will be described herein.

In order to clearly describe the present invention, some portions not related to the description will be omitted and not shown, and the same reference numerals are given to the same or similar components throughout this disclosure. Further, some embodiments of the present invention will be described in detail with reference to the illustrative drawings. In giving reference numerals to components of the drawings, the same reference numerals may be given to the same components even though the same components are shown in different drawings. Further, in the following description of the present invention, when a detailed description of related known configurations or functions is determined to obscure the gist of the present invention, the detailed description thereof will be omitted.

In describing components of the present invention, when the components are disclosed as "connected," "coupled," or "contacted" to another component, the components can be directly connected or contacted to another component, but it should be understood that still another component could be "interposed" between the component and another component or could be "connected," "coupled," or "contacted" therebetween.

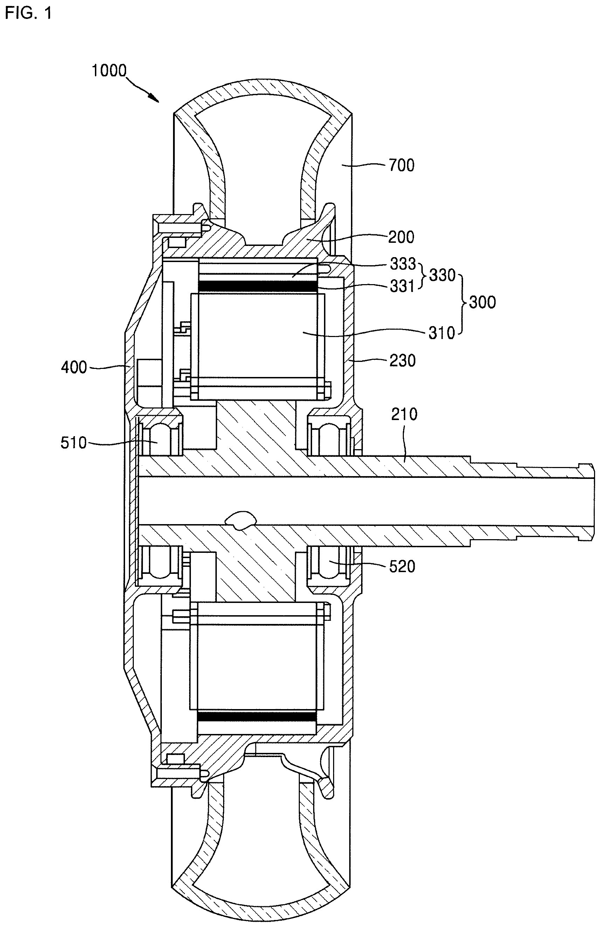

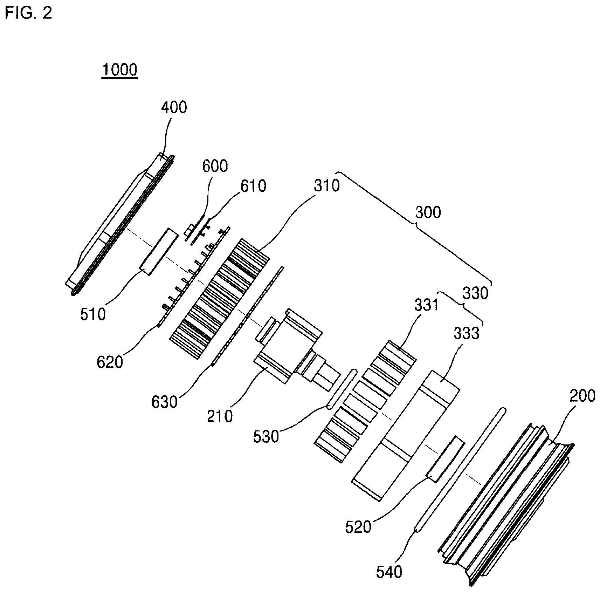

FIG. 1 is a schematic cross-sectional view illustrating an in-wheel motor according to embodiments of the present invention, and FIG. 2 is an exploded perspective view illustrating a coupling structure of the in-wheel motor according to embodiments of the present invention.

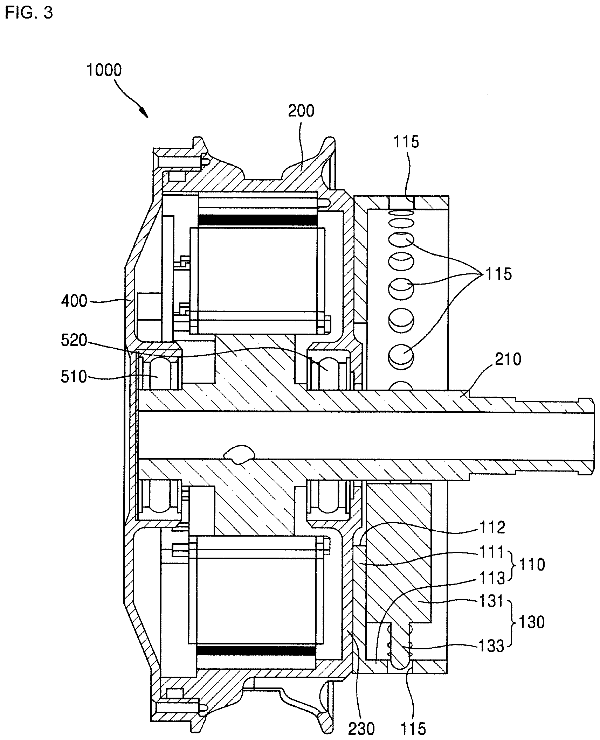

Referring to FIGS. 1 and 2, an in-wheel motor 1000 according to the embodiments of the present invention includes a rim 200, a motor assembly 300, a front cover 400, and a brake device 100 (see FIG. 3).

The rim 200 is a rigid circular member forming a wheel.

A hollow portion having a predetermined size is provided inside the rim 200. A shaft 210 and the motor assembly 300 are provided in the hollow portion of the rim 200.

Specifically, centers of all of the rim 200, the shaft 210, and the motor assembly 300 are arranged to be coaxial and coupled. Meanwhile, a tire 700 surrounds and is coupled to an outer side of an edge of the rim 200.

The motor assembly 300 is disposed between and coupled to the shaft 210 and the rim 200 inside the rim 200.

Specifically, the motor assembly 300 includes a stator 310 and a rotor 330.

The stator 310 is arranged to surround the shaft 210 inside the rim 200 in a circumferential direction and is connected to the shaft 210.

For example, a hub is provided inside the stator 310, and the shaft 210 passes through a center of the hub to be coupled to the stator 310.

The rotor 330 is arranged to surround the stator 310.

However, the rotor 330 is disposed to be spaced a set distance from an outer circumferential surface of the stator 310. Consequently, when a current is applied to the stator 310 and then an electromagnetic force is generated, the rotor 330 is rotated.

The rotor 330 includes a magnet part 331 and a core part 333 surrounding the magnet part 331.

The magnet part 331 refers to a magnet (i.e., a permanent magnet).

When electric power is applied to the stator 310, an electromagnetic force is generated between the stator 310 and the rotor 330 having the magnet part 331. Further, the rotor 330 is rotated around the stator 310 due to the electromagnetic force.

The core part 333 is a member that surrounds and fixes the magnet part 331 and refers to a body portion of the rotor 330.

Meanwhile, the stator 310 is connected to the shaft 210 to not be rotated, and only the rotor 330 is rotated outside the stator 310. Consequently, the rim 200 and tire 700 are connected to the rotor 330 and are rotated together with the rotor 330 around the shaft 210.

The front cover 400 is coupled to a front surface of the rim 200.

Here, the front surface of the rim 200 refers to an outer side of the in-wheel motor 1000 based on the rim 200.

In other words, the front cover 400 is coupled to the rim 200 to be located outside the tire 700 and serves to shield the shaft 210, the motor assembly 300, and the like from the outside.

The brake device 100 (see FIG. 3) is a device which brakes the tire 700 by stopping the rim 200.

In other words, when electric power is supplied to the stator 310, the rotor 330 is rotated.

Further, the rim 200 and the tire 700 are rotated together with the rotor 330.

When braking of the tire 700 is necessary, a rotation of the rim 200 should be stopped and a stop state of the rim 200 should be maintained so as to prevent any further rotation of the rim 200.

When braking is necessary for the in-wheel motor 1000, the brake device 100 (see FIG. 3) of the in-wheel motor 1000 of the present invention stops the rotation of the rim 200 which is rotated together with the tire 700. Further, even when a supply of electric power is cut off, the brake device 100 (see FIG. 3) mechanically prevents the rotation of the rim 200 so as to maintain the stop state of the rim 200.

The brake device of an in-wheel motor of the present invention will be described in detail with reference to FIGS. 3 to 7.

Meanwhile, referring to FIG. 2, the in-wheel motor 1000 according to the embodiments of the present invention further includes a Hall sensor board 600, a plurality of bearings 510 and 520, and a plurality of O-rings 530 and 540.

The Hall sensor board 600 includes a Hall sensor for detecting a magnetic force in the motor assembly 300 included in the in-wheel motor 1000. Therefore, the Hall sensor board 600 is preferably located close to the motor assembly 300.

For example, the Hall sensor board 600 may include at least one Hall sensor or include two Hall sensors.

Two bearings 510 and 520 may be used. One bearing 510 may be disposed at a front end of the shaft 210 and referred to as a first bearing 510.

The other bearing 520 may be disposed at a rear end of the shaft 210 and referred to as a second bearing 520.

Specifically, referring to FIG. 1, the first bearing 510 is disposed to be confined between the front cover 400 and the front end of the shaft 210. Consequently, the first bearing 510 reduces contact friction in a front end portion of the shaft 210 to assist a smooth rotation of the tire 700.

Further, the second bearing 520 is disposed to be confined between a rear end 230 of the rim 200 and a rear end portion of the shaft 210. Consequently, the second bearing 520 reduces contact friction in the front end portion of the shaft 210 to assist the smooth rotation of the tire 700.

As described above, the first and second bearings 510 and 520 serve to assist the smooth rotation of the tire 700 by reducing friction while supporting both the front and rear end portions of the shaft 210.

Two O-rings 530 and 540 may be used. One O-ring 530 is disposed in the rear end portion of the shaft 210 to seal an interior of the in-wheel motor 1000 from the outside. This O-ring 530 is referred to as a shaft O-ring 530.

The other O-ring 540 is disposed in an inner coupling portion of the front cover 400 to seal the interior of the in-wheel motor 1000 from the outside. This O-ring 540 is referred to as a front cover O-ring 540.

However, a larger number of the O-rings 530 and 540 than the number of the O-rings 530 and 540 shown in FIG. 2 may be used, and the arrangement positions of the O-rings 530 and 540 may also be slightly changed. Accordingly, the number and positions of the O-rings 530 and 540 shown in the drawings are not limited to the present invention.

Further, referring to FIG. 2, the in-wheel motor 1000 according to the embodiments of the present invention further includes an insulator 610 for a Hall sensor board coupled to the Hall sensor board 600. Further, the in-wheel motor 1000 further includes a plurality of insulators 620 and 630 coupled to a front side and a rear side of the motor assembly 300. The number and coupling positions of the insulators 620 and 630 may not be limited to that illustrated in the drawing and may be changed as necessary.

Next, the brake device 100 of the in-wheel motor 1000 according to one embodiment of the present invention will be described in detail.

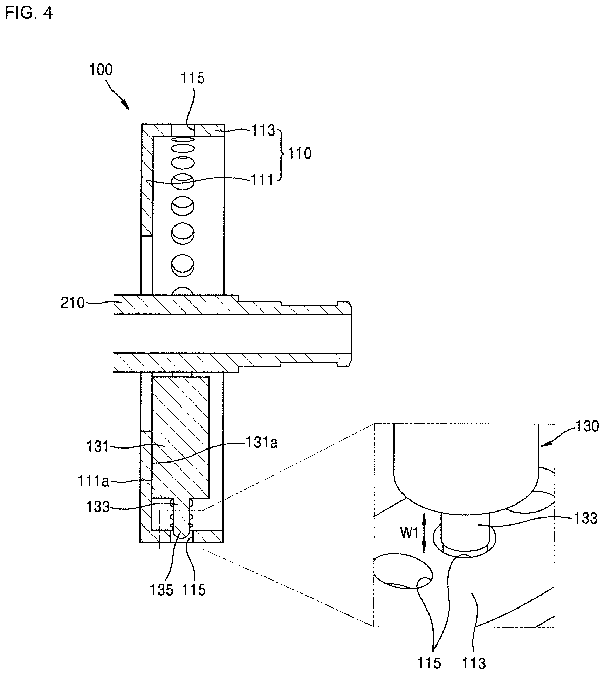

Among the drawings, FIG, 3 is a schematic cross-sectional view illustrating a brake device of an in-wheel motor according to one example, and FIG. 4 is a diagram for describing an operational structure of the brake device of an in-wheel motor according to one example.

Referring to FIGS. 3 and 4, the brake device 100 illustrated in the drawings includes a brake drum part 110, which is fixed to the rim 200 and having a hole 115, and a pin pushing/pulling driver 130 for pushing/pulling a pin 133 toward and from the hole 115.

The brake drum part 110 is in contact with and fixed to one surface of the rim 200 constituting the in-wheel motor 1000, that is, the rear end 230 of the rim 200.

Further, the brake drum part 110 has at least one hole 115 along an edge in a circumferential direction.

However, it is preferable that a plurality of holes 115 are provided at predetermined intervals along the circumferential direction.

This is because, as the number of holes 115 increases, the pin 133 protruding toward the hole 115 may be more rapidly inserted through any hole 115.

In other words, as the number of holes 115 increases, the pin 133 is more easily inserted into the hole 115, and there is an advantage of reducing a braking time.

As a specific example, the brake drum part 110 includes a disc body 111 and a circumferential protrusion 113.

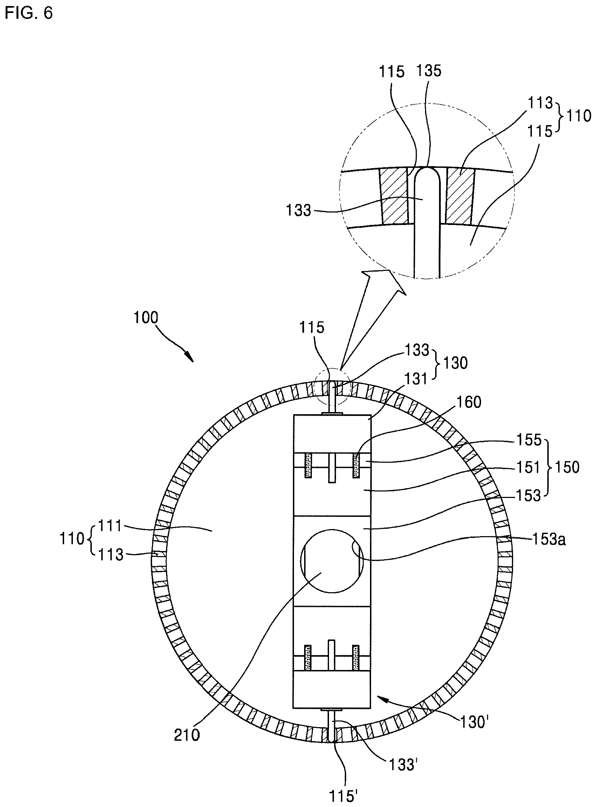

The disc body 111 has a circular plate shape (see FIG. 6).

The disc body 111 is disposed such that the shaft 210 of the in-wheel motor 1000 passes through the hollow.

Further, the disc body 111 is fixed to one surface of the rim 200. More specifically, an outer wall of the disc body 111 faces, is in contact with, and is fixed to the rear end 230 of the rim 200.

Consequently, when the rim 200 is rotated, the disc body 111 is rotated together with the rim 200, and the brake drum part 110 has a structure in which, when the rotation of the disc body 111 is stopped, the rotation operation of the rim 200 is braked.

The circumferential protrusion 113 is a portion which protrudes from an edge of the disc body 111 to have a predetermined length in a direction spaced apart from the rim 200 (i.e., a direction opposite a direction of the rim 200).

The circumferential protrusion 113 has the hole 115 through the protruding portion. In this case, the hole 115 is formed by passing through the circumferential protrusion 113 in a thickness direction thereof.

As a specific example, referring to FIG. 6, a plurality of holes 115 may be provided.

The plurality of holes 115 may be arranged to be spaced by a predetermined interval along the circumferential protrusion 113 in the circumferential direction thereof.

Further, each of the plurality of holes 115 may be radially arranged in a direction of a center of the circumferential protrusion 113.

However, the number and shape of the holes 115 may be changed to correspond to the pin 133 and is not necessarily limited to the form illustrated in the drawings.

Meanwhile, an entry portion of the hole 115 at which an insertion of the pin 133 is started may have a round shape or an inclined shape.

This is for the pin 133 to be inserted into the hole 115 more easily, and a front end portion 135 of the pin 133 may also be formed to have a curved surface in a hemispherical shape.

Further, the hole 115 may have an inner diameter that is larger than an outer diameter of the pin 133. Also, this is for the pin 133 to be easily inserted into the hole 115.

Further, the pin 133 is preferably made of a material having structural rigidity so as to be capable of maintaining a sufficient braking force even after being inserted into the hole 115.

This is because, when the pin 133 is damaged, the pin 133 is released from the hole 115 such that the braking of the in-wheel motor 1000 may be released.

When a brake signal is input to the in-wheel motor 1000, the pin pushing/pulling driver 130 pushes and pulls the pin 133, which has a size insertable into the hole 115, toward and from the hole 115.

When the pin 133 protrudes toward the hole 115 to be inserted thereinto, a rotation of the brake drum part 110 is stopped and thus a rotation of the rim 200 is also stopped. Consequently, an operation of the in-wheel motor 1000 is interrupted and the braking force is maintained.

Specifically, the pin pushing/pulling driver 130 is located inside the brake drum part 110.

For example, referring to FIG. 4, the pin pushing/pulling driver 130 may be installed inside the brake drum part 110 in a radial direction thereof.

In this case, the pin 133 is installed to be protrudable from a front end portion of the pin pushing/pulling driver 130 and provided to be pushed and pulled toward and from the hole 115 according to an input of a braking signal.

For example, referring to FIG. 4, the pin pushing/pulling driver 130 includes a linear actuator 131 which pushes and pulls the pin 133 in a linear direction.

The linear actuator 131 refers to a device which drives the pin 133 or a rod-shaped member similar thereto forward and backward in a front-rear direction of the disc body 111.

The linear actuator 131 pushes and pulls the pin 133 toward and from the hole 115 of the circumferential protrusion 113.

Accordingly, when the pin 133 is inserted into the hole 115, the rotation of the brake drum part 110 is stopped, and the rotation of the rim 200 connected to the brake drum part 110 is also stopped.

Meanwhile, unlike the brake drum part 110, the pin pushing/pulling driver 130 is fixed to the shaft 210 instead of the rim 200.

Therefore, a side surface 131a of the linear actuator 131 is disposed to face an inner wall 111a of the disc body 111. When the brake signal is input, the linear actuator 131 protrudes the pin 133 to insert the pin 133 into the hole 115. A direction W1 of FIG. 4 indicates a direction in which the pin 133 is pushed and pulled. Therefore, the pin pushing/pulling driver 130 may stop the rotation of the brake drum part 110.

Next, a brake device 100 of an in-wheel motor 1000 according to an embodiment of the present invention will be described in detail.

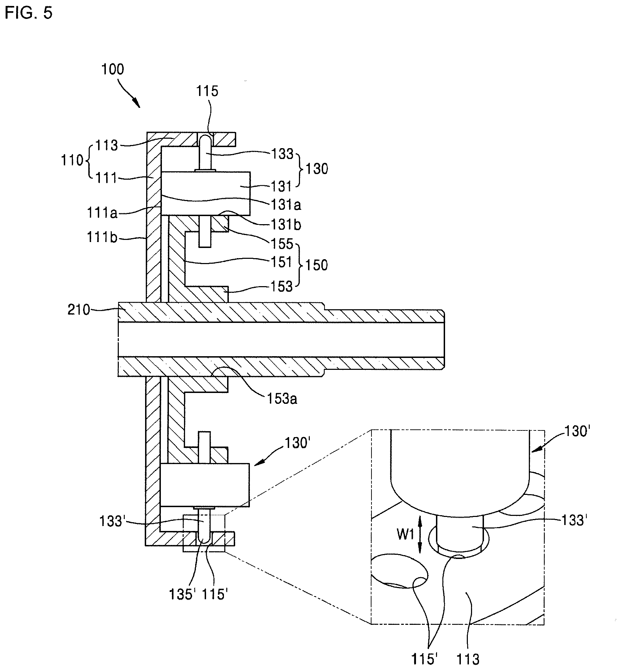

Referring to FIGS. 5 and 6, unlike the example described with reference to FIGS. 3 and 4, the brake device 100 of the in-wheel motor 1000 according to the present invention further includes a support part 150 (see FIG. 5).

The support part 150 supports and fixes a rear end 131b of a linear actuator 131.

Further, the support part 150 is located inside the brake drum part 110 and has a form that surrounds and is coupled to a shaft 210.

As a specific example, referring to FIGS. 5 and 6, the support part 150 includes a fixing plate 151, a boss 153, and a protrusion 155.

The fixing plate 151 is a plate-shaped member disposed parallel to a disc body 111.

The fixing plate 151 is spaced a predetermined distance from an inner wall 111a of the disc body 111 and located parallel to the disc body 111.

Further, the fixing plate 151 is disposed in a direction perpendicular to the shaft 210 and coupled to the shaft 210 by the boss 153.

The boss 153 has a hollow 153a. The hollow 153a of the boss 153 is an installation space through which the shaft 210 passes to be coupled thereto.

Further, the boss 153 protrudes from a center of an interior of the fixing plate 151 in a direction parallel to the shaft 210.

Consequently, the boss 153 is in contact with and fixed to the shaft 210 in a larger area such that, when braking, the boss 153 may provide robust structural rigidity with respect to a force transmitted through a pin pushing/pulling driver 130.

Further, durability of the brake device 100 may be increased.

The protrusion 155 serves to fix and support the linear actuator 131.

One protrusion 155 may be provided at each of both ends of the fixing plate 151 in a length direction thereof.

Further, a pair of protrusions 155 provided as described above protrude in a direction parallel to the shaft 210.

As a specific example, referring to FIG. 6, the fixing plate 151 may use a rectangular plate-shaped member.

For example, a long side of the rectangular fixing plate 151 may have a length that is smaller than a diameter of the disc body 111.

Further, a length center of the long side of the rectangular fixing plate 151 may coincide with a center of the shaft 210 which is coupled by passing through the hollow 153a of the boss 153.

Further, protrusions 155 are provided at both ends of the long side of the rectangular fixing plate 151.

The protrusion 155 may be spaced apart from a circumferential protrusion 113 and located inside the disc body 111.

Meanwhile, the rear end 131b of the linear actuator 131 is disposed to be pressed against an outer wall of the protrusion 155.

Further, at least one engagement screw 160 is disposed between and engaged with the rear end 131b of the linear actuator 131 and the protrusion 155.

Thus, the linear actuator 131 may be firmly fixed to the protrusion 155.

For example, referring to FIG. 6, two pin pushing/pulling drivers 130 and 130' may be included in one brake device 100 of an in-wheel motor.

The linear actuators 131 and 131' are arranged at symmetrical positions based on the shaft 210, and each of the linear actuators 131 and 131' is firmly fixed through the outer wall of the protrusion 155.

Further, each of the linear actuators 131 and 131' is engaged with and fixed to the protrusion 155 using two engagement screws 160.

In this case, the two engagement screws 160 are engaged with a left side and a right side of the protrusion 155 by interposing the pin 133 between the two engagement screws 160.

This takes into account loads applied to a left side and a right side of the pin 133 while the pin 133 is inserted into the hole 115 to perform braking of the in-wheel motor.

Therefore, the two engagement screws 160 may maintain a more stable braking force in response to forward and reverse rotations of the in-wheel motor.

In other words, referring to the enlarged cross-sectional view of FIG. 6, a braking state of the in-wheel motor when the pin 133 is inserted into the hole 115 is illustrated.

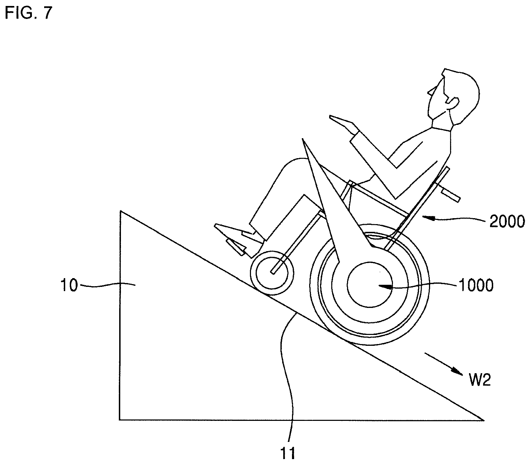

In a topographic condition such as an inclined road shown in FIG. 7, or in a condition in which an external force which is not expected by a user is applied to the in-wheel motor, the in-wheel motor would continue to rotate in the forward or reverse direction.

In this case, in a state of being inserted into the hole 115, the pin 133 receives a force from either a left side or a right side due to a rotation of the circumferential protrusion 113 formed around the hole 115.

In other words, the force may be applied from the left side from the pin 133, and, contrarily, the force may be applied from the right side from the pin 133.

Therefore, the plurality of engagement screws 160 are firmly engaged by being spaced to the left side and the right side from a position at which the pin 133 is pushed and pulled such that it is possible to secure a structural rigidity which is capable of withstanding a load applied to the pin 133.

Further, the plurality of pin pushing/pulling drivers 130 and 130' are included in a single brake device 100 of an in-wheel motor. Thus, a large braking force required for braking of the brake drum part 110 may be generated using relatively small electrical energy.

Meanwhile, although not separately illustrated, two or more pin pushing/pulling drivers 130 and 130' may be provided.

For example, four pin pushing/pulling drivers may be arranged in a cross shape at a center angle of 90 degrees inside the circumferential protrusion 113.

FIG. 7 illustrates a wheelchair 2000 as an example of transportation to which the in-wheel motor 1000 including the brake device according to the embodiments of the present invention is applied.

The brake device included in the in-wheel motor 1000 receives an electrical braking signal and pushes the pin to be inserted into the hole, thereby stopping a rotation of the rim.

As described above, the brake device of the in-wheel motor 1000 has advantages of both of an electronic brake and a mechanical brake.

When the wheelchair 2000 is stopped on an inclined road 10 and even when a supply of electric power to the brake device of the in-wheel motor 1000 is cut off, a braking force of the in-wheel motor 1000 may be maintained due to restraint between the pin and the hole. Therefore, even when the supply of the electric power to the wheelchair 2000, which is stopped on the inclined road 10, is cut off, the wheelchair 2000 may not slide along an inclined surface 11 in a direction W2. Consequently, in the case of an emergency in which the supply of the electric power is cut off, an accident of a user using the wheelchair 2000 can be prevented.

As described above, according to the configuration and operation of the embodiments of the present invention, the brake of the in-wheel motor can be actively operated according to an instruction of the user. Accordingly, in an emergency, transportation such as a wheelchair can be braked quickly and safely.

Further, there is an advantage in that rapid braking of the in-wheel motor is possible using an electronic actuator. In addition to the above description, during the braking of the in-wheel motor, the in-wheel motor can have a mechanical mechanism in which the pin pushed or pulled due to operation of the electronic actuator is inserted into the hole of the brake drum coupled to the in-wheel motor. Consequently, the in-wheel motor can exert a large braking force using relatively small electrical energy.

Further, when transportation such as a wheelchair to which the in-wheel motor is applied is stopped on an inclined road and even a supply of electric power is cut off or a problem occurs in a power supply system, mechanical restraint between the pin and the hole is maintained such that a braking force can be maintained. Consequently, even in an emergency in which the supply of the electric power is suddenly cut off on the inclined road, the braking force is maintained in the in-wheel motor such that safety of a user can be achieved.

In addition to the above-described effects, specific effects of the present invention have been described together with the above detailed description for implementing the present invention.

## Claims

1. A brake device of an in-wheel motor, comprising:
a brake drum part (110) fixed to one surface of a rim (200) of an in-wheel motor (1000), wherein the brake drum part (110) includes:
a disc body (111) having a through hole (112) and an outer wall, wherein a shaft (210) of the in-wheel motor (1000) is disposed to pass through said through hole (112) and the outer wall is fixed to the rim (200); and
a circumferential protrusion (113) having a predetermined length and protruding from an edge of the disc body (111) in a direction away from the rim (200),
**characterized in that**
at least one hole (115) is formed in the circumferential protrusion (113), and **in that** the brake device further comprises at least one pin pushing/pulling driver (130) installed inside the brake drum part (110) in a radial direction thereof and configured to push or pull a pin (133), which is insertable into the hole (115) according to an input of a braking signal of the in-wheel motor (1000), toward or from the hole (115),
wherein the pin pushing/pulling driver (130) includes a linear actuator (131) configured to push or pull the pin (133) toward or from the hole (115) in response to a braking signal of the in-wheel motor (1000), and
wherein the brake device further comprising a support part (150) that surrounds and is coupled to the shaft (210) inside the brake drum part (110) and fixedly supports a rear end of the linear actuator (131).

2. The brake device of claim 1, wherein:
the linear actuator (131) is connected to the shaft (210); and
a side surface of the linear actuator (131) is disposed to face an inner wall of the disc body (111).

3. The brake device of claim 1 or 2, wherein:
the hole (115) is provided as a plurality of holes; and
the plurality of holes (115) are arranged to be spaced by a predetermined interval along the circumferential protrusion in a circumferential direction thereof.

4. The brake device of any one of claims 1 to 3, wherein:
a front end portion of the pin (133) has a round shape; and
the hole (115) has an inner diameter that is larger than an outer diameter of the pin (133).

5. The brake device of claim 1, wherein the support part (150) includes:
a fixing plate (151) that is spaced apart from an inner wall of the disc body (111) to be perpendicularly coupled to the shaft (210) and is disposed parallel to the disc body (111);
a boss (153) protruding from a center of an inner side of the fixing plate (151) in a direction parallel to the shaft (210) and having a hollow (153a), wherein the shaft (210) passes through and is coupled to the hollow (153a); and
a protrusion (155) protruding from each of both longitudinal ends of the fixing plate (151) in the direction parallel to the shaft (210) and configured to fix and support the linear actuator (131).

6. The brake device of claim 5, wherein the fixing plate (151) is a rectangular plate member having a length that is smaller than a diameter of the disc body (111).

7. The brake device of claim 5, or 6, wherein a protruding length of the protrusion (155) is formed to correspond to a protruding length of the boss (153).

8. The brake device of claim 5, 6, or 7, wherein:
the linear actuator (131) is provided as a plurality of linear actuators; and
each of the plurality of linear actuators (131) is disposed to be pressed against an outer wall of the protrusion (155) and is fixed to the protrusion by at least one engagement screw (160).

9. An in-wheel motor comprising:
a rim (200) having an outer ring and a hollow part, wherein a tire surrounds and is coupled to the outer ring, and a shaft (210) passes through and is coupled to the hollow part;
a motor assembly (300) including a stator (310) connected to the shaft inside the rim (200) and a rotor (330) configured to surround and rotate around the stator (310);
a front cover (400) coupled to a front surface of the rim (200); and
a brake device (100) according to any one of the preceding claims.

10. The in-wheel motor of claim 9, further comprising:
at least one bearing (510, 520) provided at each of a front end and a rear end of the shaft (210);
a shaft O-ring (530) provided on the shaft and configured to maintain airtightness; and
a front cover O-ring (540) provided on the front cover and configured to maintain airtightness.

11. The in-wheel motor of claim 9, or 10, wherein:
the linear actuator (131) is connected to the shaft (210), and a side surface of the linear actuator (131) is disposed to face an inner wall of a disc body (111).

12. The in-wheel motor of claim 9, 10, or 11, wherein:
the hole (115) is provided as a plurality of holes; and
the plurality of holes (115) are arranged to be spaced by a predetermined interval along a circumferential protrusion in a circumferential direction thereof.

13. The in-wheel motor of claim 9,
wherein the support part (150) includes:
a fixing plate (151) that is spaced apart from an inner wall of the disc body (111) to be perpendicularly coupled to the shaft and is disposed parallel to the disc body (111);
a boss (153) protruding from a center of an inner side of the fixing plate (151) in a direction parallel to the shaft (210) and having a hollow, wherein the shaft (210) is passes through and is coupled to the hollow; and
a protrusion (155) protruding from each of both longitudinal ends of the fixing plate (151) in the direction parallel to the shaft (210) and configured to fix and support the linear actuator (131),
wherein a protruding length of the protrusion is formed to correspond to a protruding length of the boss (153).

## Patentansprüche

1. Bremsvorrichtung eines Radnabenmotors, die aufweist:
ein Bremstrommelteil (110), das an einer Oberfläche einer Felge (200) eines Radnabenmotors (1000) befestigt ist, wobei das Bremstrommelteil (110) aufweist:
einen Scheibenkörper (111) mit einem Durchgangsloch (112) und einer Außenwand, wobei eine Welle (210) des Radnabenmotors (1000) so angeordnet ist, dass sie das Durchgangsloch (112) durchläuft, und die Außenwand an der Felge (200) befestigt ist; und
einen Umfangsvorsprung (113), der eine vorbestimmte Länge hat und von einer Kante des Scheibenkörpers (111) in einer von der Felge (200) wegführenden Richtung vorsteht,
**dadurch gekennzeichnet, dass**
mindestens ein Loch (115) im Umfangsvorsprung (113) gebildet ist, und dadurch dass
die Bremsvorrichtung ferner mindestens einen Stift-Schub-/Zugantrieb (130) aufweist, der innerhalb des Bremstrommelteils (110) in Radialrichtung davon eingebaut und so konfiguriert ist, dass er einen Stift (133), der in das Loch (115) gemäß einer Eingabe eines Bremssignals des Radnabenmotors (1000) einführbar ist, zum Loch (115) schiebt oder daraus zieht,
wobei der Stift-Schub-/Zugantrieb (130) ein Linearstellglied (131) aufweist, das so konfiguriert ist, dass es den Stift (133) als Reaktion auf das Bremssignal des Radnabenmotors (1000) zum Loch (115) schiebt oder daraus zieht, und
wobei die Bremsvorrichtung ferner ein Stützteil (150) aufweist, das die Welle (210) innerhalb des Bremstrommelteils (110) umgibt und damit gekoppelt ist sowie ein hinteres Ende des Linearstellglieds (131) fest stützt.

2. Bremsvorrichtung nach Anspruch 1, wobei:
das Linearstellglied (131) mit der Welle (210) verbunden ist; und
eine Seitenfläche des Linearstellglieds (131) so angeordnet ist, dass sie zu einer Innenwand des Scheibenkörpers (111) weist.

3. Bremsvorrichtung nach Anspruch 1 oder 2, wobei:
das Loch (115) als mehrere Löcher vorgesehen ist; und
die mehreren Löcher (115) so angeordnet sind, dass sie einen vorbestimmten Abstand entlang des Umfangsvorsprungs in Umfangsrichtung davon haben.

4. Bremsvorrichtung nach einem der Ansprüche 1 bis 3, wobei:
ein vorderer Endabschnitt des Stifts (133) eine Rundform hat; und
das Loch (115) einen Innendurchmesser hat, der größer als ein Außendurchmesser des Stifts (133) ist.

5. Bremsvorrichtung nach Anspruch 1, wobei das Stützteil (150) aufweist:
eine Befestigungsplatte (151), die von einer Innenwand des Scheibenkörpers (111) so beabstandet ist, dass sie mit der Welle (210) senkrecht gekoppelt ist, und parallel zum Scheibenkörper (111) angeordnet ist;
einen Ansatz (153), der von einer Mitte einer Innenseite der Befestigungsplatte (151) in Parallelrichtung zur Welle (210) vorsteht und einen Hohlraum (153a) hat, wobei die Welle (210) den Hohlraum (153a) durchläuft und damit gekoppelt ist; und
einen Vorsprung (155), der jeweils von beiden Längsenden der Befestigungsplatte (151) in Parallelrichtung zur Welle (210) vorsteht und so konfiguriert ist, dass er das Linearstellglied (131) befestigt und stützt.

6. Bremsvorrichtung nach Anspruch 5, wobei die Befestigungsplatte (151) ein rechteckiges Plattenbauteil mit einer Länge ist, die kleiner als ein Durchmesser des Scheibenkörpers (111) ist.

7. Bremsvorrichtung nach Anspruch 5 oder 6, wobei eine Vorsprunglänge des Vorsprungs (155) so ausgebildet ist, dass sie einer Vorsprunglänge des Ansatzes (153) entspricht.

8. Bremsvorrichtung nach Anspruch 5, 6 oder 7, wobei:
das Linearstellglied (131) als mehrere Linearstellglieder vorgesehen ist; und
jedes der mehreren Linearstellglieder (131) so angeordnet ist, dass es an eine Außenwand des Vorsprungs (155) gedrückt und am Vorsprung durch mindestens eine Eingriffsschraube (160) befestigt wird.

9. Radnabenmotor, der aufweist:
eine Felge (200) mit einem Außenring und einem Hohlteil, wobei ein Reifen den Außenring umgibt und damit gekoppelt ist und eine Welle (210) das Hohlteil durchläuft und damit gekoppelt ist;
eine Motoranordnung (300) mit einem Stator (310), der mit der Welle innerhalb der Felge (200) verbunden ist, und einem Rotor (330), der so konfiguriert ist, dass er den Stator (310) umgibt und darum dreht;
eine vordere Abdeckung (400), die mit einer Vorderfläche der Felge (200) gekoppelt ist; und
eine Bremsvorrichtung (100) nach einem der vorstehenden Ansprüche.

10. Radnabenmotor nach Anspruch 9, der ferner aufweist:
mindestens ein Lager (510, 520), das jeweils an einem vorderen Ende und einem hinteren Ende der Welle (210) vorgesehen ist;
einen O-Ring (530) der Welle, der auf der Welle vorgesehen und so konfiguriert ist, dass er Luftdichtigkeit wahrt; und
einen O-Ring (540) der vorderen Abdeckung, der auf der vorderen Abdeckung vorgesehen und so konfiguriert ist, dass er Luftdichtigkeit wahrt.

11. Radnabenmotor nach Anspruch 9 oder 10, wobei:
das Linearstellglied (131) mit der Welle (210) verbunden ist und eine Seitenfläche des Linearstellglieds (131) so angeordnet ist, dass sie zu einer Innenwand des Scheibenkörpers (111) weist.

12. Radnabenmotor nach Anspruch 9, 10 oder 11, wobei:
das Loch (115) als mehrere Löcher vorgesehen ist; und
die mehreren Löcher (115) so angeordnet sind, dass sie einen vorbestimmten Abstand entlang eines Umfangsvorsprungs in Umfangsrichtung davon haben.

13. Radnabenmotor nach Anspruch 9,
wobei das Stützteil (150) aufweist:
eine Befestigungsplatte (151), die von einer Innenwand des Scheibenkörpers (111) so beabstandet ist, dass sie mit der Welle senkrecht gekoppelt ist, und parallel zum Scheibenkörper (111) angeordnet ist;
einen Ansatz (153), der von einer Mitte einer Innenseite der Befestigungsplatte (151) in Parallelrichtung zur Welle (210) vorsteht und einen Hohlraum hat, wobei die Welle (210) den Hohlraum durchläuft und damit gekoppelt ist; und
einen Vorsprung (155), der jeweils von beiden Längsenden der Befestigungsplatte (151) in Parallelrichtung zur Welle (210) vorsteht und so konfiguriert ist, dass er das Linearstellglied (131) befestigt und stützt,
wobei eine Vorsprunglänge des Vorsprungs so ausgebildet ist, dass sie einer Vorsprunglänge des Ansatzes (153) entspricht.

## Revendications

1. Dispositif de frein d'un moteur-roue comprenant :
une partie de tambour de frein (110) fixée sur une surface d'une jante (200) d'un moteur-roue (1000), dans lequel la partie de tambour de frein (110) comprend :
un corps de disque (111) ayant un trou débouchant (112) et une paroi externe, dans lequel un arbre (210) du moteur-roue (1000) est disposé pour passer par ledit trou débouchant (112) et la paroi externe est fixée sur la jante (200) ; et
une saillie circonférentielle (113) ayant une longueur prédéterminée et faisant saillie d'un bord du corps de disque (111) dans une direction à distance de la jante (200),
**caractérisé en ce que** :
au moins un trou (115) est formé dans la saillie circonférentielle (113), et **en ce que** :
le dispositif de frein comprend en outre au moins un dispositif d'entraînement de poussée/traction de broche (130) installé à l'intérieur de la partie de tambour de frein (110) dans sa direction radiale et configuré pour pousser ou tirer une broche (133), qui peut être insérée dans le trou (115) selon une entrée d'un signal de freinage du moteur-roue (1000), vers ou depuis le trou (115),
dans lequel le dispositif d'entraînement de poussée/traction de broche (130) comprend un actionneur linéaire (131) configuré pour pousser ou tirer la broche (133) vers ou depuis le trou (115) en réponse à un signal de freinage du moteur-roue (1000), et
dans lequel le dispositif de frein comprenant en outre une partie de support (150) qui entoure et est couplée à l'arbre (210) à l'intérieur de la partie de tambour de frein (110) et supporte de manière fixe une extrémité arrière de l'actionneur linéaire (131).

2. Dispositif de frein selon la revendication 1, dans lequel :
l'actionneur linéaire (131) est raccordé à l'arbre (210) ; et
une surface latérale de l'actionneur linéaire (131) est disposée pour faire face à une paroi interne du corps de disque (111).

3. Dispositif de frein selon la revendication 1 ou 2, dans lequel :
le trou (115) est prévu sous la forme d'une pluralité de trous ; et
la pluralité de trous (115) sont agencés pour être espacés par un intervalle prédéterminé le long de la saillie circonférentielle dans sa direction circonférentielle.

4. Dispositif de frein selon l'une quelconque des revendications 1 à 3, dans lequel :
une partie d'extrémité avant de la broche (133) a une forme ronde ; et
le trou (115) a un diamètre interne qui est supérieur à un diamètre externe de la broche (133).

5. Dispositif de frein selon la revendication 1, dans lequel la partie de support (150) comprend :
une plaque de fixation (151) qui est espacée d'une paroi interne du corps de disque (111) pour être couplée perpendiculairement à l'arbre (210) et est disposée parallèlement au corps de disque (111) ;
un bossage (153) faisant saillie d'un centre d'un côté interne de la plaque de fixation (151) dans une direction parallèle à l'arbre (210) et ayant un creux (153a), dans lequel l'arbre (210) passe à travers et est couplé au creux (153a) ; et
une saillie (155) faisant saillie de chacune des deux extrémités longitudinales de la plaque de fixation (151) dans la direction parallèle à l'arbre (210) et configurée pour fixer et supporter l'actionneur linéaire (131).

6. Dispositif de frein selon la revendication 5, dans lequel la plaque de fixation (151) est un élément de plaque rectangulaire ayant une longueur qui est inférieure à un diamètre du corps de disque (111).

7. Dispositif de frein selon la revendication 5 ou 6, dans lequel une longueur en saillie de la saillie (155) est formée pour correspondre à une longueur en saillie du bossage (153).

8. Dispositif de frein selon la revendication 5, 6 ou 7, dans lequel :
l'actionneur linéaire (131) est prévu sous la forme d'une pluralité d'actionneurs linéaires ; et
chacun de la pluralité d'actionneurs linéaires (131) est disposé pour être comprimé contre une paroi externe de la saillie (155) et est fixé sur la saillie par au moins une vis de mise en prise (160).

9. Moteur-roue comprenant :
une jante (200) ayant un anneau externe et une partie creuse, dans lequel un pneu entoure et est couplé à l'anneau externe, et un arbre (210) passe à travers et est couplé à la partie creuse ;
un ensemble de moteur (300) comprenant un stator (310) raccordé à l'arbre à l'intérieur de la jante (200) et un rotor (330) configuré pour entourer et tourner autour du stator (310) ;
un couvercle avant (400) couplé à une surface avant de la jante (200) ; et
un dispositif de frein (100) selon l'une quelconque des revendications précédentes.

10. Moteur-roue selon la revendication 9, comprenant en outre :
au moins un palier (510, 520) prévu au niveau de chacune parmi une extrémité avant et une extrémité arrière de l'arbre (210) ;
un joint torique d'arbre (530) prévu sur l'arbre et configuré pour maintenir l'étanchéité à l'air ; et
un joint torique de couvercle avant (540) prévu sur le couvercle avant et configuré pour maintenir l'étanchéité à l'air.

11. Moteur-roue selon la revendication 9 ou 10, dans lequel :
l'actionneur linéaire (131) est raccordé à l'arbre (210), et une surface latérale de l'actionneur linéaire (131) est disposée pour faire face à une paroi interne d'un corps de disque (111).

12. Moteur-roue selon la revendication 9, 10 ou 11, dans lequel :
le trou (115) est prévu sous la forme d'une pluralité de trous ; et
la pluralité de trous (115) sont agencés pour être espacés selon un intervalle prédéterminé le long d'une saillie circonférentielle dans sa direction circonférentielle.

13. Moteur-roue selon la revendication 9,
dans lequel la partie de support (150) comprend :
une plaque de fixation (151) qui est espacée d'une paroi interne du corps de disque (111) pour être couplée perpendiculairement à l'arbre et est disposée parallèlement au corps de disque (111) ;
un bossage (153) faisant saillie d'un centre d'un côté interne de la plaque de fixation (151) dans une direction parallèle à l'arbre (210) et ayant un creux, dans lequel l'arbre (210) passe à travers et est couplé au creux ; et
une saillie (155) faisant saillie de chacune des deux extrémités longitudinales de la plaque de fixation (151) dans la direction parallèle à l'arbre (210) et configurée pour fixer et supporter l'actionneur linéaire (131),
dans lequel une longueur en saillie de la saillie est formée pour correspondre à une longueur en saillie du bossage (153).
